# EUROPEAN PATENT APPLICATION

(11) **EP 0 628 526 A1**
(43) Date of publication of application: **14.12.1994**
(21) Application number: 94108690.2
(22) Date of filing: 07.06.1994
(51) Int. Cl.: C05F 9/00, C05F 9/02

(54) **Process and system for the transformation of refuse**

(30) Priority: 07.06.1993 IT TO930410
(71) Applicant: S.T.R.A.P. S.r.l, I-10071 Borgaro Torinese (Torino) (IT)
(72) Inventor: Morgantini, Gianpiero, I-10126 Torino (IT); Pellegrin, Roberto, I-10128 Torino (IT)
(74) Representative: Rambelli, Paolo

(57) **Abstract**

A process and system in which the three fractions obtainable by dry subdivision of urban and like refuse (heavy fraction, organic fraction and light fraction) are worked in aqueous phase thereby obtaining only very small amounts of solid waste together with reusable plastics material and a good agricultural fertiliser. The working phases of the cycle are: extraction with water of the organic content of the heavy fraction; fermentation of the organic fraction and the extracts; pulping in water of the fermented mass, cleaning, disinfecting, extraction of the metallic compounds, dehydration; pulping in water of the light fraction, cleaning, separation of the plastics material, disinfection, mixing with the dehydrated organic material, final dehydration and drying.

## Description

The present invention relates to a process and a system for obtaining the transformation of urban refuse (and the like such as commercial refuse, industrial and agricultural refuse with a matrix of organic material, gardening and graveyard refuse) with a high transformation yield into clean plastics material reusable for moulding or to produce energy, and a good quality fertiliser for agricultural use.

The problems connected with the reutilisation of refuse components in agriculture or combustion are known to derive both from the difficulty of separation and the wide variety of individual components in the refuse. The composting methods currently in use have their own limitations due to the difficulty of separation and purification of the components, which are simply sub-divided into fractions which are internally inhomogeneous.

In contrast to the current composting systems in which, after sub-division of the refuse into a heavy fraction, an organic fraction and a light fraction, fermentation of only the organic fraction takes place whilst, due to the aforesaid difficulties, the heavy and light fractions are left unaltered, the present process and system are characterised by:
- processes performed on the entirety of the refuse;
- processes performed in aqueous suspensions;
- high transformation yield with consequent formation of a reduced quantity of waste to be eliminated;
- elimination of the organic content present in the heavy fraction to obtain clean and non-perishable solid wastes;
- obtaining reusable plastics materials;
- transformation into agricultural fertiliser even of woody and paper material which is rendered easily biodegradable;
- the possibility of eliminating metal compounds;
- obtaining a fertiliser free from extraneous bodies, pathogenic germs, live seeds, unpleasant odours, and phyto-and zoo-toxic substances.

In general, the term transformation yield of a process is intended to mean that amount of refuse which is transformed into substances no longer intended for disposal, known composting methods are usually characterised by modest transformation yields. In such processes, in fact, of the three fractions obtained after a coarse dry subdivision, only the organic fraction is in any way transformed, giving rise to "compost".

The result of this is thus that both the heavy fraction and the light fraction, which however also carry with them many organic substances, are still destined for disposal, that is to say they are still refuse. Whilst it is true that the light fraction could be utilised by burning it (the so-called R.D.F. that is Refuse Derived Fuel) to recover the calorific content, but this reutilisation is complex and often impossible.

This difficulty results from the fact that R.D.F. cannot be used in the same way as current fuels because of the presence of paper (which also contains up to 40% fillers) and chlorinated plastics materials which results in large quantities of ash as well as dangerous emissions. Therefore R.D.F. can be utilised only in special incinerating apparatus provided with gasifiers and heat recoverers, which systems are often not to be found or are at a remote distance and therefore expensive to use.

As far as the detrimental agronomic quality of the fertilisers which can be obtained with the composting methods known until now is concerned, this is due to the fact that in known such processes there is no specific provision or operation for an effective elimination from the compost of extraneous substances contained in it, such as toxic metal compounds, live seeds and pathogenic germs. In fact, simple fermentation of the organic fraction obtained by dry subdivision of the refuse, if not followed by further particular operations, leads to a quality strictly dependent on the characteristics of the refuse, its content of metal compounds, pathogens etc.

Since the process forming the subject of the invention also provides, as an initial phase, for a dry classification, we will now hereinafter examine how this operation takes place, and its limits, in order to explain how these will be overcome. The urban refuse is broken down into fragments of the order of several centimetres and then subjected to mechanical separation with combined systems which are based on sieving and on the diversity of weights which are present, obtaining a coarse division of its components into these three fractions:
- "heavy fraction", equal to about 10-15% by weight of the refuse, constituted by earth, bricks, metal bodies, batteries, tin plate, glass, ceramics, plastics in blocks or lumps, heavy plastics etc, mixed with organic material;
- "organic fraction", equal to about 30-40% of the refuse, constituted by wet substances capable of putrifaction, that is to say table scraps and kitchen residues, market residues, flowers, garden refuse as well as earth, films, tins, food wrappers, paper, nappies, plastic, cotton etc;
- "light fraction", equal to about 35-55% of the refuse, constituted by films and various laminar materials such as tin plate, aluminium, paper, cardboard, plastics, printed circuits on sheets, rubber, leather, imitation leather, fabrics as well as nappies, padding, shavings and organic materials.

Due to the fact that the chopped urban refuse contains parts of non-homogeneous dimensions and components joined together, this method of classification leads to the following disadvantages. First, each fraction, due to the phenomena of adhesion and entrainment, as well as being constituted by materials of similar weight, also contains those materials which predominate in other fractions. Secondly: the organic fraction is not constituted exclusively of perishable substances.

The result is that subjecting the thus-separated organic fraction to fermentation results in a compost being obtained which will contain various unwanted bodies among which are plastic stoppers, small pieces of celluloid, cellophane, food wrap, aluminium, polyethylene, paper, granules of polystyrene etc. Since these materials are not rapidly degradable in the environment the compost thus obtained, even if refined with various dry systems such as re-cutting, sieving and aeration still remain rather coarse and involve a progressive deterioration of ground on which they have to be repeatedly applied.

Moreover, in such compost there will be, as normally occurs, compounds of toxic metals if such material is present in the urban refuse, such as for example batteries containing dangerous metals, and if biological muds which always contain such metals are added in the fermentation phase as purifiers. This contamination of the compost is even more serious than that due to the extraneous bodies and, to avoid contamination in the food chain it is necessary by law to apply such composts to the ground in a very careful manner so as not to exceed the maximum admissible concentrations allowed by law and for safety.

Finally, the ordinary compost possesses another not insignificant quality defect connected to the omission of any process for inactivation of viruses, pathogenic germs and seeds. In fact it happens that during fermentation, and especially during the cold periods, the temperature in the fermentation vessel does not often exceed 40-50°C with the result that inactivation of pathogens - which takes place only at higher temperatures - is in no way guaranteed for the agricultural workers. As far as seeds are concerned, the composts are often hardly usable in agricultural cultivation because of the presence of live seeds.

The process and system which form the subject of the invention are intended to obtain a clean and disinfected fertiliser, as well as to overcome the problems due to the difficulty of removing and rendering fermentable the lignin and cellulose contained in paper, which problems normally lower the transformation yields.

In view of these objects the subject of the present invention is a process and system as defined in the claims which follow.

The process and system forming the subject of the invention will be illustrated hereinafter with reference to the attached drawings provided by way of non-limitative example, in which:

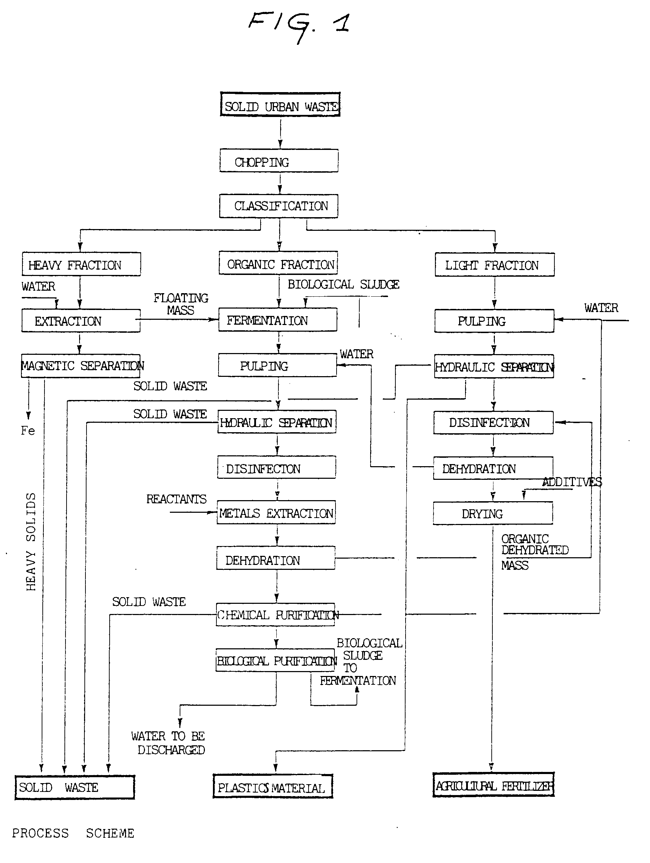

Figure 1 is a block diagram of the process; and

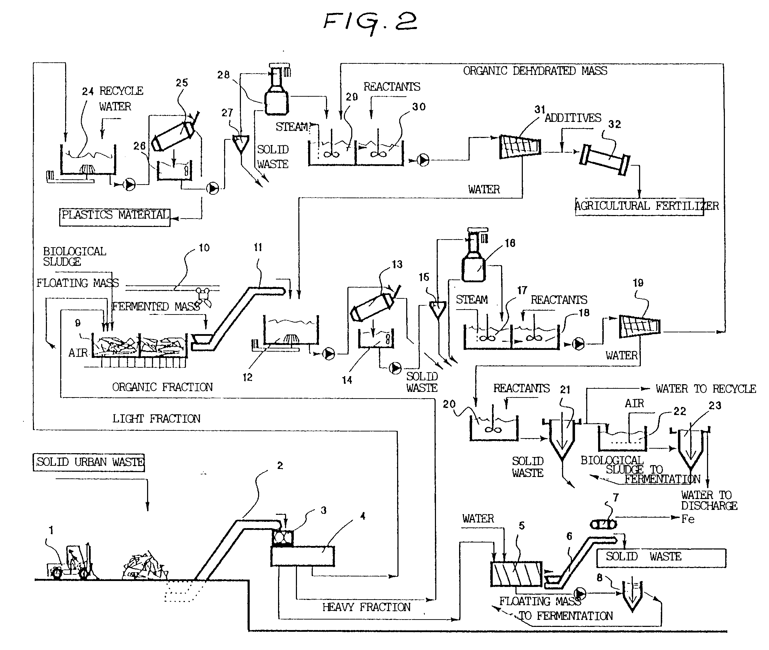

Figure 2 is a diagram explaining the system.

Refuse is first loaded with a mechanical shovel 1 or similar machinery onto a conveyor belt 2 which continuously feeds a chopper 3 and an underlying classifier 4 which separates the refuse into a heavy fraction, a light fraction and an organic fraction.

The heavy fraction is transferred to extraction and washing apparatus 5 similar to the rotating apparatus used in quarries for washing gravel, where water is used for extracting the organic materials which the heavy fraction also contains in significant quantities. The washed part is sent away on a conveyor belt 7 separately obtaining recoverable ferrous materials and solid waste, the latter being washed, non-perishable and able to be discharged without problems. The organic part present in the aqueous phase is mixed with water, saturated with air and separated by flotation in the flotator 8; the water is recycled whilst the organic part proceeds to the fermentation section.

The organic fraction separated from the refuse is fed to fermentation vessel 9 preferably aerobic - although an anaerobic fermentation could be equally usable - together with the flotation products and biological muds which are of both internal and external origin, where, with classical techniques a fermented mass is obtained.

The fermented mass is transferred with a grab bucket 10 to a belt 11 which supplies a pulper 12 similar to those used in paper mills, filled with used water coming from the end of the light fraction treatment section. The pulping, which is a batch process, lasts for about 5 to 15 minutes obtaining at the end a pulp of about 5% dry substance in suspension with the various extraneous bodies already present in the starting fermenting mass.

Once pulping has finished the pulp is supplied to a wash water screen 13 provided with an extractor helix which separates the extraneous bodies to add to the solid waste whilst the pulp, which by the effect of the washing falls to a concentration of about 4%, is collected in a vat 14.

From the vat 14 the pulp is pumped to a hydro centrifuge cleaner 15 which separates the heavy parts, and then to a centrifugal separator 16, like the turbo remover used in paper mills, for the separation of straws and light parts, where in particular the plastics films are separated, washed and added to the solid waste.

The purified pulp proceeds to a vat 17 where it is disinfected at a temperature of about 70°C obtained preferably by blowing live steam through it; in these conditions seeds are inactivated. The fermented mass, now being in a dispersed phase and at high temperature, can be subjected in a vat 18 to methods of extraction with chemical reagents for the purpose of dissolving and extracting the metal compounds. Both complexing systems and acid-oxidising systems can be used among which are the sulphuric acid-hypochlorite system. Flocculating and polyelectrolytic agents are introduced to facilitate the subsequent mechanical dehydration.

At the end of the operation the pulp proceeds to a dehydrator 19 of the screw press type or other, where a mechanical dehydration takes lace up to a concentration of dry substance of about 50% which will be forwarded to be worked in the light fraction, as well as water which proceeds for chemical and biological purification.

The chemical purifier provides a vessel 20 where flocculating reagents are added, and a decanter-flotator 21. Part of the treated water is recycled to the light fraction washing section and part discharged after biological purification using classical systems such as activated mud aerobic systems comprising a vessel 22 and a sedimentator 23.

The light fraction of the refuse is transferred with a grab bucket or a belt to a pulper 24 filled with used water from the chemical purifier 21. The pulping phase, which is a batch process, lasts for about 5-15 minutes, obtaining at the end a pulp of about 5% dry substance in a suspension of various non-pulpable extraneous bodies. When pulping is finished the pulp is supplied to a wash water screen 25 provided with an extractor helix which separates the plastics materials whilst the pulp, which by the effect of the washing falls to a concentration of about 4%, passes to a vat 26.

From the vat 26 the pulp is pumped to a hydrocentrifuge cleaner 27 which separates the heavy parts, and to a centrifugal separator 28 of turbo remover type where in particular the plastics films which are washed and added to the solid waste is separated.

The purified pulp proceeds to a vat 29 where it is disinfected with live steam at about 70°C, and then proceeds to a vat 30 where flocculating and polyelectrolitic materials to facilitate the subsequent dehydration, and if necessary further disinfecting reagents are introduced, then the pulp passes to a dehydrator 31 of screw press type or the like which takes the mass to a concentration of about 50% dry material and then the dehydrated mass and additives of trace elements and correctors passes to a dryer 32 from which is extracted an agricultural fertiliser with a dry content of about 80%. The water eliminated from the final dehydration unit is reutilised in the fermented mass pulping phase.

The pulpers can be replaced by similar machines of discontinuous or continuous type, such as steam mills and again the cleaners, the hydrocyclones and the turbo removers can be replaced by equivalent machines or machines of lower speed and efficiency such as simple natural settlement tanks.

## Claims

1. A process for transformation of refuse containing an organic matrix, particularly urban refuse, in which the chopped refuse is subjected to classification to obtain a heavy fraction, an organic fraction and a solid fraction, characterised in that the said fractions are further treated in aqueous phases to obtain non-perishable solid waste, suitable for disposal, recyclable plastics material and an agricultural fertiliser.

2. A process according to Claim 1, in which the organic fraction, after fermentation, and containing extraneous substances to be separated, is dispersed in water by a pulping action to obtain a pulp including the said extraneous substances in suspension, the pulping action being conducted in conditions such as not to break up the extraneous substances and in such a way as to allow separation thereof by screening and/or centrifugal means.

3. A process according to Claim 1 in which the heavy fraction including organic substances is subjected to extraction and washing for the extraction of an organic fraction and in which the washed heavy fraction containing solid waste, including iron has the iron separated from it by magnetic means to give non perishable solid waste and in which the organic fraction is possibly sent to the fermentation process.

4. A process according to Claim 1 in which the light fraction, including extraneous substances to be separated is dispersed in water by pulping action to obtain a pulp including the extraneous bodies in suspension, the said pulping action being conducted in conditions such as not to break up the extraneous substances so that these maintain dimensions suitable for separation by screening and/centrifugal means.

5. A process according to Claim 2 or Claim 4, in which the said pulping action is effected with the use of pulpers such as those used in paper mills, in conditions such as to break down the cellulose and lignin fibres present in the organic and light fractions for the purpose of rendering them easily biodegradable.

6. A process according to Claim 2 or Claim 4, in which the pulp obtained from the treatment of the organic and light fraction is subjected to hydraulic separation for the removal of solid waste.

7. A process according to Claims from 2 to 4, in which the pulp obtained from the said organic and light fractions are subjected to disinfection by heat treatment at temperatures greater than 60°C.

8. A process according to Claims 2, 4, 5, 6 or 7 in which an agricultural fertiliser is produced by mixing the pulp extracted by hydraulic means from the light fraction with the dehydrated organic material obtained from the hydraulic purification of the fermented organic fraction.

9. A process according to any preceding Claim in which the organic mass is present in aqueous suspension and is subjected to extraction of the components and metal salts by means of complexing or reactive chemical substances.

10. A process according to Claim 2 or Claim 4, in which the aqueous dispersions obtained from the said light and organic fractions are heat treated to inactivate pathogenic germs and seeds.

11. A process according to any preceding claim, in which the water obtained from the treatment of the light fraction is reutilised for washing the organic fraction.

12. A system for performing the process according to any preceding claim.

13. A system according to Claim 12, for the transformation of urban and like refuse, characterised in that the washing of the separable fractions of the refuse is effected by means of machines in use in the paper industry such as pulpers, cleaners, hydrocyclones, centrifugal separators, turbo removers and screw dehydrators.

14. A system according to Claim 13 in which the pulping operations are effected by means of discontinuous pulpers, comprising a vessel having at the bottom a rotor provided with cutters capable of pulping the soft parts leaving the plastics and extraneous parts unaltered which can thus be eliminated using screening and centrifugal systems or with pulpers of discontinuous or continuous type.

15. The use of paper-industry pulpers for the treatment in aqueous suspension of the light fraction and the organic fraction separated by classification from solid refuse.
